(19) Europäisches Patentamt
European Patent Office
Office européen des brevets

(11) **EP 1 902 060 B1**

(12) **FASCICULE DE BREVET EUROPEEN**

(45) Date de publication et mention
de la délivrance du brevet:
**11.08.2010 Bulletin 2010/32**

(21) Numéro de dépôt: **06764746.1**

(22) Date de dépôt: **07.06.2006**

(51) Int Cl.:
***C07F 7/16*** *(2006.01)*

(86) Numéro de dépôt international:
**PCT/FR2006/001291**

(87) Numéro de publication internationale:
**WO 2006/136673 (28.12.2006 Gazette 2006/52)**

(54) **PROCEDE DE SYNTHESE DIRECTE D'ALKYLHALOGENOSILANES**

DIREKTES VERFAHREN ZUR SYNTHESE VON ALKYLHALOGENOSILANEN

ALKYLHALOGENOSILANE DIRECT SYNTHESISING METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.06.2005 FR 0506328**

(43) Date de publication de la demande:
**26.03.2008 Bulletin 2008/13**

(73) Titulaire: **Bluestar Silicones France**
**69486 Lyon Cedex 03 (FR)**

(72) Inventeurs:
• **COLIN, Pascale**
  **F-69680 Chassieu (FR)**
• **GARCIA-ESCOMEL, Cristina**
  **F-69005 Lyon (FR)**
• **MASTEAU, Jean-Claude**
  **F-69007 Lyon (FR)**

(56) Documents cités:
**FR-A- 2 861 727      FR-A- 2 861 728**
**US-A1- 2002 156 310**

**Description**

La présente invention se rapporte à des améliorations concernant le procédé industriel mis en oeuvre pour la synthèse directe d'alkylhalogénosilanes.

Le procédé industriel de fabrication d'alkylhalogénosilanes et, par exemple, de diméthyldichlorosilane dénommé par la suite DMDCS, est un procédé bien connu qui est décrit notamment dans le brevet des Etats-Unis d'Amérique US-A-2 380 995, ainsi que dans l'ouvrage de Walter NOLL, Chemistry and Technology of Silicones, 1968 , édition Académie Press Inc., LONDON, pages 26-41.

Selon ce procédé dit de "synthèse directe" ou "synthèse de Rochow", on fabrique directement les alkylhalogénosilanes, par exemple le DMDCS, par réaction du chlorure de méthyle sur une masse de contact solide formée de silicium et d'un catalyseur comprenant du cuivre, suivant la reaction :

$$2CH_3Cl + Si \rightarrow (CH_3)_2SiCl_2.$$

En réalité il se forme au cours de la synthèse directe d'autres co-produits tels que ceux mentionnés ci-après : d'autres alkylhalogénosilanes comme le méthyltrichlorosilane $CH_3SiCl_3$ dénommé par la suite MTCS et le triméthylchlorosilane $(CH_3)_3SiCl$ dénommé par la suite TMCS ; des alkylhydrogénosilanes halogénés comme par exemple le méthylhydrogénodichlorosilane $(CH_3)HSiCl_2$ dénommé par la suite MHDCS ; et des produits lourds qui sont des polysilanes, et en particulier des disilanes comme par exemple le triméthyltrichlorodisilane $(CH_3)_3Si_2Cl_3$ et le diméthyltétrachlorodisilane $(CH_3)_2Si_2Cl_4$.

Parmi tous les produits obtenus par synthèse directe, le dialkyldihalogénosilane et, par exemple le DMDCS, est le principal produit, c'est à dire le produit obtenu en quantité majoritaire. Ce produit est très recherché car, après hydrolyse et polymérisation, il permet d'obtenir des huiles et des gommes qui sont des produits de base pour la fabrication des silicones.

Il est connu d'utiliser le cuivre, pris sous forme de cuivre métallique ou sous forme de composés chimiques à base de cuivre, comme catalyseur de la réaction de synthèse directe.

Il est également connu, dans le but d'amener les performances de la synthèse directe à un niveau économiquement viable, de rajouter au cuivre un ensemble promoteur comportant un ou plusieurs additif(s) promoteur(s) ; ces additifs peuvent être : le zinc ou un halogénure de zinc (brevet US-A-2 464 033), l'aluminium (brevets US-A-2 403 370 et 2 427 605), l'étain, le manganèse, le nickel et l'argent (brevet britannique GB-A-1 207 466), le cobalt (brevet britannique GB-A-907 161), le chlorure de potassium (brevet soviétique SU-A-307 650), l'arsenic ou un composé de l'arsenic (brevet US-A-4 762 940), l'etain et le zinc (brevet FR 2861728).

Cependant, malgré tout l'intérêt des systèmes catalytiques (catalyseur au cuivre en mélange avec un ensemble promoteur) proposés dans l'art antérieur, les recherches continuent dans ce domaine pour obtenir des performances supérieures à celles obtenues avec les meilleurs systèmes catalytiques antérieurement connus, en particulier le système catalytique comprenant du cuivre, du zinc et de l'étain.

Différentes sources de cuivre peuvent être utilisées, à savoir, outre le cuivre métallique (Cu°), le chlorure cuivreux (CuCl) et le cuivre oxydé.

CuCl est connu pour apporter un gain en activité ou réactivité (évaluée par exemple en poids des silanes obtenus par heure et par kilogramme de silicium initialement engagé) et en sélectivité (évaluée par exemple par le pourcentage pondéral de DMDCS formé par rapport aux silanes obtenus) par rapport au cuivre métallique. Il permet aussi de diminuer la durée de la période d'amorçage de la réaction, ainsi que la quantité des sous-produits formés pendant cette période d'amorçage ; pour la conduite de la réaction de synthèse directe, en effet, on réalise avantageusement au préalable, comme cela est bien connu, une étape initiale d'activation de la masse de contact (formée par l'ensemble à base de silicium + catalyseur + éventuels promoteurs) ; un des moyens d'activation qui convient bien peut consister à porter ladite masse de contact à une certaine température qui peut être inférieure ou supérieure de quelques degrés à quelques dizaines de degrés à la température choisie pour la réaction de synthèse directe.

De nombreux auteurs se sont intéressés à cette période d'amorçage qui correspond à la réaction entre le CuCl et le silicium et qui aboutit à la formation de sites actifs. Le mécanisme de cette réaction n'est pas encore clairement défini après plus de cinquante ans d'étude. Deux modèles de réaction sont aujourd'hui considérés :

Tamhankar S.S., Gokkarn A.N. and Doraiswamy L.K., 1981, Chem. Eng. Sci., 36, 1365-1372 proposent un mécanisme en deux étapes. La première étape est la réduction du CuCl par le silicium pour former du cuivre métallique et du SiCl4 suivi de la formation de Cu3Si par diffusion du cuivre dans le silicium :

nSi + 4CuCl (n - 1) Si* + 4Cu*+SiCl$_4$
3Cu* + Si $\rightarrow$ Cu$_3$Si

Weber G., Vile D., Souha M. et Guillot B., 1988, C.R.Acad.Sci.Paris, t.307, Série II, pages 1155-1161 proposent un chemin réactionnel où le cuivre métallique est le produit final :

$$7Si + 12\ CuCl \rightarrow Cu_3Si + 3SiCl_4$$
$$31\ Cu_3Si + 12CuCl \rightarrow 7\ Cu_{15}Si + 3SiCl_4$$
$$9Cu_{15}Si + 20CuCl \rightarrow 31\ Cu_5Si + 5SiCl_4$$
$$Cu_SSi + 4CuCl \rightarrow 9Cu + SiCl_4$$

De nombreux facteurs influencent la réaction entre Si et CuCl : la concentration en CuCl, les opérations de mélangeage et de broyage des poudres, l'épaisseur de la couche de $SiO_2$ sur le silicium, la température et la pression.

Des travaux récents visant à déterminer quelle est l'étape initiale de la réaction entre le cuivre et le CuCl ont été publiés Acker J., Köhter S., Lewis K.M. and Bohmhammel K., 2003, Silicon Chemistry, 2 : 195-206. La principale conclusion de ces travaux est que la réaction enter le chlorure de cuivre et le silicium a lieu à l'état solide. Le moindre changement des propriétés de surface du CuCl conduit donc à une modification de la réactivité.

Sur la base de ces données on peut s'attendre à ce que la surface spécifique du CuCl utilisé soit un paramètre clé de sa réactivité, ce qui nous oriente logiquement vers l'utilisation de fines particules qui offrent une grande surface de contact au silicium.

Néanmoins, pour des raisons de mise en oeuvre industrielle, la demanderesse a testé une nouvelle mise en forme de ce produit sous forme de billes. Ces billes sphériques possèdent une surface lisse et sont issues d'un processus d'atomisation ou de "prilling". Elles présentent l'avantage d'offrir un meilleur écoulement et un faible poussiérage par rapport aux poudres de faible granulométrie. En revanche, la demanderesse s'attendait à obtenir des résultats médiocres en terme notamment de réactivité et de sélectivité étant donné leur faible surface spécifique et l'absence d'irrégularités sur la surface connues pour favoriser l'amorçage des réactions solide/solide.

Il a maintenant été trouvé de façon surprenante, et c'est ce qui constitue l'objet de la présente invention, que :

-   si le catalyseur au cuivre, utilisé pour conduire la réaction de synthèse directe, est engagé sous la forme de billes d'halogénure cuivreux,
-   on observe alors que lesdites billes conduisent à faciliter l'utilisation du CuCl industriellement en faisant disparaître les contraintes liées au mauvais écoulement dans les transports pneumatiques ainsi qu'au poussiérage lors de la manipulation, sans perte de réactivité ni de sélectivité de la réaction de synthèse directe.

La présente invention propose en conséquence un procédé de préparation d'alkylhalogénosilanes par réaction d'un halogénure d'alkyle, de préférence $CH_3Cl$, avec une masse solide, dite masse de contact, formée de silicium et d'un système catalytique comportant ($\alpha$) un catalyseur au cuivre, et ($\beta$) un groupe d'additifs promoteurs comprenant :

-   un additif $\beta1$ choisi parmi le zinc métallique, un composé à base de zinc et un mélange de ces espèces,
-   un additif $\beta2$ choisi parmi l'étain, un composé à base d'étain et un mélange de ces espèces,
-   éventuellement un additif $\beta3$ choisi parmi le césium, le potassium, le rubidium, le phosphore, un composé dérivé de ces métaux/métalloïdes et un mélange de ces espèces,

ledit procédé de synthèse directe étant caractérisé en ce que le catalyseur au cuivre ($\alpha$) est sous la forme de billes d'halogénure cuivreux, lesdites billes présentant les spécifications suivantes :

+ un facteur de sphéricité qui se situe dans l'intervalle allant de 0,6 à 1 ;
+ une distribution granulométrique où la valeur de D50 se situe dans l'intervalle allant de 50 à 1500 $\mu$m ; il est difficile techniquement de descendre, par le processus d'atomisation dont on a parlé ci-avant, en dessous de la borne 50 ; au-dessus de la borne 1500, on perd en réactivité ;
+ une texture poreuse qui est égale ou inférieure à 0,2 ml/g pour un diamètre de pores allant de 0,1 à 10 $\mu$m ; la borne inférieure peut être aussi petite que celle égale à zéro ;
+ et une coulabilité qui est égale ou supérieure à 8 ; à propos de la borne supérieure, l'homme de métier sait qu'elle peut être aussi élevée qu'une valeur infinie lorsque la force de cohésion (telle que définie ci-après) tend vers zéro.

I - Mesures et tests utilisés :

A) Facteur de sphéricité

Les objets produits par atomisation, spray drying, spray cooling ou prilling présentent une forme sphérique. Pour quantifier la sphéricité des objets, on procède de la façon suivante par analyse d'image. Sur au minimum 100 objets, on mesure les longueurs caractéristiques des petits et grands diamètres pour chaque objet. Pour chaque objet, le facteur de sphéricité est défini comme le rapport du petit diamètre sur le grand diamètre. Pour une sphère parfaite, le rapport est de 1. Pour des grains de morphologie variable, ce rapport est inférieur à 1 et tend vers 1 lorsque l'on se rapproche de la sphéricité parfaite.

Sur 100 objets prélevés, on calcule le facteur de sphéricité selon le rapport des diamètres, puis on effectue la moyenne des facteurs de sphéricité. Pour ce faire, de manière connue en soi, l'échantillon des particules est dispersé sur une plaque de verre placée sous un microscope optique relié à un système d'analyse d'images. Il est également possible d'utiliser le protocole opératoire décrit dans l'ouvrage : "Silicon for the chemical industry", II, LOEN NORWAY 8-10 June 1994, par Oye H.A., Rong H.M., Nygaard L., Schüssler G., Tusset J.Kr., TAPIR VORLAG TRONDHEIM.

B) Distribution granulométrique :

La distribution granulométrique des objets est obtenue par mesure par diffraction laser sur un granulomètre de chez Malvern, en utilisant le module en voie sèche Sirocco (condition de pression : 3 bar). Les grandeurs utilisées dans ce document concernent le $D_{10}$ (10% de particules en masse présentent un diamètre inférieur au $D_{10}$ en $\mu$m), le $D_{50}$ (50% de particules en masse présentent un diamètre inférieur au $D_{50}$ en $\mu$m), le $D_{90}$ (90% de particules en masse présentent un diamètre inférieur au $D_{90}$ en $\mu$m). Le coefficient de variation quantifiant l'étendue de la distribution sera défini tel que :

$$CV = \frac{(d90 - d10)}{2 \times d50}$$

L'analyse granulométrique par diffraction laser est réalisée selon les indications de la norme AFNOR NF ISO 13320-1.

C) Texture poreuse :

La texture poreuse des objets est déterminée par porosimétrie mercure à l'aide d'un appareil Autopore IV de la société Micromeritics. Il s'agit d'une méthode basée sur l'intrusion de mercure dans le réseau poreux (intergranulaire ou intragranulaire). Cette intrusion est gérée via une montée en pression. La gamme de pression (P) utilisée est de 0,003 MPa à 400 MPa. Par l'équation de Washburn, on relie facilement le diamètre des pores (2r) à la pression appliquée :

$$r = (-) \frac{2 . \gamma_{LV} . \cos \theta}{P}$$

Les paramètres pris en compte pour le mercure sont respectivement: $485.10^{-5}$ N/cm pour la tension superficielle $\gamma_{LV}$ et 130° pour la valeur de l'angle de mouillage $\theta$. Les résultats sont présentés en volume de mercure introduit par gramme d'échantillon en fonction de la pression (donc du diamètre des pores) appliquée.

La porosimétrie mercure est une notion technique qui est bien connue de l'homme de métier ; pour plus de détails, on peut se reporter notamment à l'article : Gomez F., Denoyel R., Rouquerol J., Langmuir, 16, 3474 (2000).

D) Coulabilité :

La coulabilité des poudres est mesurée par cisaillement d'un échantillon par cellule annulaire (commercialisée par D. Schulze, Allemagne). Le précisaillement des poudres est effectuée sur une cellule d'une surface de 81 cm$^2$ avec une contrainte normale équivalente à une masse de 4,3 kg. Les points de cisaillement pour tracer le lieu d'écoulement de l'échantillon sont obtenus pour 4 contraintes inférieures à la contrainte du précisaillement (typiquement pour des contraintes équivalentes en masse à 0,4-0,7-1,7-2,5 kg). A partir des cercles de Mohr (dans un diagramme contrainte de cisaillement fonction des contraintes normales), on obtient sur le lieu d'écoulement 2 contraintes (l'une est l'extrémité du grand cercle de Mohr qui passe par le point de précisaillement et est appelé contrainte normale dans la direction principale, l'autre est l'extrémité du petit cercle de Mohr, cercle tangent au lieu d'écoulement et passant par l'origine, que l'on nommera force de cohésion). Le rapport contrainte normale dans la direction principale sur la force de cohésion est un nombre adimensionnel, l'indice de coulabilité. D'après l'échelle de Jenike, il est possible de classer la coulabilité des poudres en fonction des valeurs de l'indice :

| i < 2 | Produit très cohésif, ne coule pas |
| 2 < i < 4 | Produit cohésif |
| 4 < i < 10 | Produit coulant facilement |
| i > 10 | Produit s'écoulant librement ou "free-flowing" |

La coulabilité des poudres est une notion technique qui est également bien connue de l'homme de métier ; pour plus de détails, on peut se reporter notamment à l'ouvrage : "Standard shear testing technique for particulate solids using the Jenike shear cell"; publié par "The Institution of Chemical Engineers", 1989 (ISBN : 0 85295 232 5).

II - Conditions de réalisation de l'invention concernant le catalyseur au cuivre ($\alpha$) :

Conformément à une modalité préférentielle de mise en oeuvre de l'invention, le catalyseur au cuivre ($\alpha$) est sous la forme de billes d'halogénure cuivreux, les dites billes présentant les spécifications suivantes :

+ un facteur de sphéricité qui se situe dans l'intervalle allant de 0,8 à 1 ;
+ une distribution granulométrique où la valeur de D50 se situe dans l'intervalle allant de 50 à 800 $\mu$m;
+ une texture poreuse qui est égale ou inférieure à 0,1 ml/g pour un diamètre de pores allant de 0,1 à 10 $\mu$m ;
+ et une coulabilité qui est égale ou supérieure à 10.

Conformément à une modalité plus préférentielle de mise en oeuvre de l'invention, le catalyseur au cuivre ($\alpha$) est sous la forme de billes d'halogénure cuivreux, les dites billes présentant les spécifications suivantes :

+ un facteur de sphéricité qui se situe dans l'intervalle allant de 0,9 à 1 ;
+ une distribution granulométrique où la valeur de D50 se situe dans l'intervalle allant de 50 à 500 $\mu$m ;
+ une texture poreuse qui est égale ou inférieure à 0,05 ml/g pour un diamètre de pores allant de 0,1 à 10 $\mu$m ;
+ et une coulabilité qui est égale ou supérieure à 12.

Le catalyseur au cuivre ($\alpha$) est utilisé généralement à une teneur pondérale allant de 1 à 20%, de préférence allant de 2 à 12%, par rapport à la masse de silicium engagé.

III - Autres conditions de réalisation de l'invention :

Selon le mode de réalisation défini supra, le système catalytique contient en outre un additif promoteur $\beta$1 à base de zinc métallique et/ou d'un composé du zinc ; on utilise de préférence le zinc métallique et/ou le chlorure de zinc.
L'additif promoteur $\beta$1 est présent à une teneur pondérale située dans l'intervalle allant de 0,01 à 2%, de préférence allant de 0,02 à 0,5 %, (calculée en zinc métal par rapport au poids de silicium engagé). Jusqu'à 90 % en poids du zinc, de préférence jusqu'à 50 % en poids du zinc peut être remplacé par un autre métal qui catalyse la chloruration du cuivre et/ou qui forme un eutectique ou une phase à bas point de fusion avec les sels de cuivre et/ou les sels alcalins. Comme métal pouvant convenir on peut citer le cadmium, l'aluminium, le manganèse, le nickel et l'argent.
La teneur pondérale en étain et/ou en composé de l'étain (additif promoteur $\beta$2 dont la teneur est calculée en poids d'étain métal) se situe dans l'intervalle allant de 10 à 500 ppm et, de préférence, allant de 30 à 300 ppm par rapport à la masse de silicium engagée.
Il est nécessaire d'avoir au moins 10 ppm d'étain métal. En outre une teneur pondérale supérieure à 500 ppm aurait un effet néfaste sur la réaction et notamment sur la sélectivité. Comme composé à base d'étain, on utilise par exemple le chlorure d'étain. L'additif promoteur $\beta$2 qui est utilisé de préférence est l'étain métal ; avantageusement cet étain métallique peut être ajouté sous forme de bronze.
A propos de l'additif promoteur facultatif $\beta$3, dans le cas où on en utilise un, on précisera ci-après les points qui suivent :

■ la teneur pondérale en additif promoteur $\beta$3 de type métal (calculée en poids de métal alcalin par rapport à la masse de silicium engagée) se situe dans l'intervalle allant de 0,01 à 2 % en poids et, de préférence, allant de 0,05 à 1,0 % en poids ; au dessous de 0,01 % en poids l'action du métal alcalin n'est pas vraiment décelable et au-dessus de 2 % en poids, le métal alcalin n'a pas l'effet attendu sur la sélectivité ;
■ comme composé de métal alcalin choisi parmi le Cs, le K et le Rb, on peut utiliser : les halogénures et par exemple le chlorure ; les carboxylates et par exemple le formiate ou l'acétate ; le chlorure de césium, le chlorure de potassium, le chlorure de rubidium et/ou un mélanges de ces composés sont les additifs promoteurs $\beta$3 de type métal qui sont utilisés de préférence ;

■ quand l'additif promoteur β3 est de type métalloïde, sa teneur pondérale (calculée en poids de phosphore élémentaire par rapport à la masse de silicium engagée) se situe dans l'intervalle allant de 50 à 3000 ppm et, de préférence, allant de 80 à 1500 ppm et, plus préférentiellement encore, allant de 90 à 800 ppm ; au dessous de 50 ppm l'action du phosphore n'est pas vraiment décelable et au-dessus de 3000 ppm, le phosphore a un effet poison qui abaisse la productivité ;

■ le phosphore qui est utilisé comme additif promoteur peut être du phosphore élémentaire, tel que par exemple le phosphore rouge, le phosphore blanc et le phosphore noir. Comme composé à base de phosphore, on peut utiliser : les phosphures métalliques et par exemple le phosphure d'aluminium, le phosphure de calcium $Ca_3P_2$, le phosphure de cuivre $Cu_3P$, le phosphure de nickel $NiP_2$, le phosphure de d'étain $SnP$, les phosphures de fer $FeP$, $Fe_2P$ et $Fe_3P$, les phosphures de zinc $Zn_3P_2$ et $ZnP_2$, le phosphure de silicium ; les composés à base de phosphore aptes à former des phosphures métalliques, du type de ceux précités, lors de la réaction de synthèse directe entre l'halogénure d'alkyle et la masse de contact à base de silicium et du système catalytique (α) + (β). Comme autre composé à base de phosphore, on peut utiliser encore certains alliages qui sont connus pour contenir à la fois du phosphore et une partie métallique et sont aisément disponibles dans le commerce et par exemple les alliages cuivre-phosphore qui contiennent environ de 5 à 15 % en poids de phosphore. Le phosphure de cuivre $Cu_3P$, les alliages cuivre-phosphore et/ou un mélange de ces composés sont les additifs promoteurs β3 de type métalloïde qui sont utilisés de préférence.

A titre récapitulatif, l'additif β3 qui est utilisé de préférence est le chlorure de césium, le chlorure de potassium, le chlorure de rubidium, le phosphure de cuivre $Cu_3P$, un alliage cuivre-phosphore et/ou un mélange de ces composés.

Pour le reste, il est souhaitable que la dimension particulaire du silicium soit telle que le diamètre moyen d'au moins 50 % en poids des particules soit compris entre 10 et 500 μm et, de préférence, entre 60 et 200 μm. Le groupe de promoteurs (β) se trouve également sous forme de particules dont le diamètre moyen d'au moins 50 % en poids des particules est avantageusement compris entre 1 et 100 μm.

Le procédé de synthèse directe selon l'invention peut être mis en oeuvre de façon générale dans un des trois types d'appareillages suivants : un réacteur du type à lit agité comme celui décrit dans le brevet des Etats-Unis d'Amérique US-A-2 449 821, un réacteur du type à lit fluidisé comme celui décrit dans le brevet des Etats-Unis d'Amérique US-A-2 389 931 ou dans un four rotatif.

La réaction de synthèse directe a lieu à une température se situant dans l'intervalle allant de 260 à 400°C et, de préférence, allant de 280 à 380 °C. Elle peut être conduite, en tout ou partie, sous une pression absolue d'halogénure d'alkyle égale à la pression atmosphérique ($10^5$ Pa) ou supérieure à la pression atmosphérique ; quand on se situe dans ce dernier cas, on travaille généralement sous une pression absolue allant de $1,1.10^5$ Pa à $8.10^5$ Pa et ,de préférence, allant de $1,5.10^5$ Pa à $4.10^5$ Pa.

Pour la conduite de la réaction de synthèse directe, on réalise avantageusement au préalable, comme cela est bien connu, une étape initiale d'activation de la masse de contact (formée par l'ensemble à base de silicium + catalyseur + promoteurs) ; un des moyens d'activation qui convient bien peut consister à porter ladite masse de contact à une certaine température qui peut être inférieure ou supérieure de quelques degrés à quelques dizaines de degrés à la température choisie pour la réaction de synthèse directe et située dans l'intervalle général ou préférentiel mentionné supra.

En utilisant le système catalytique (α) + (β) selon l'invention, on peut obtenir, lorsque la réaction est mise en oeuvre, en lit agité comme en lit fluidisé, à une température allant de 260°C à 400°C et, de préférence, allant de 280 à 380 °C, une activité moyenne très satisfaisante et une sélectivité en dialkyldihalogénosilane élevées ; plus précisément :

- s'agissant de l'activité moyenne du système catalytique, elle est par exemple de l'ordre ou supérieure à 210 g de silanes/h/kg,
- s'agissant de la sélectivité, évaluée par exemple par le pourcentage pondéral de DMDCS formé par rapport aux silanes obtenus : la valeur obtenue est en général supérieure à 85 % en poids.

D'autres avantages et caractéristiques de la présente invention apparaîtront à la lecture des exemples suivants donnés à titre illustratif mais nullement limitatif.

Dans les exemples suivants, sauf mention contraire, on utilise un réacteur pilote cylindrique de diamètre intérieur 60 mm et de hauteur 250 mm, muni à sa base d'un distributeur de gaz en verre fritté. Le silicium est chargé sous forme d'une poudre dont la taille moyenne d'au moins 50 % en poids des particules est comprise entre 60 et 200 μm.

La réaction s'effectue en lit agité et le réacteur est muni d'un élément chauffant extérieur.

La présente invention sera mieux comprise à la lumière des exemples qui suivent :

**EXEMPLES :**

Dans ces exemples, les caractéristiques du CuCl mis en oeuvre sont rapportées dans le tableau 1 suivant :

TABLEAU 1

| Produit | CuCl A | CuCl B | CuCl C |
|---|---|---|---|
| Origine | Qualité laboratoire | Goldschmidt | Goldschmidt |
| Facteur de sphéricité | Sans objet car produit aciculaire | 0,92 | 0,92 |
| D10 ($\mu$m) | 5 | 74 | 15 |
| D50 ($\mu$m) | 19 | 250 | 95 |
| D90 ($\mu$m) | 45 | 590 | 283 |
| CV | 1,05 | 1,03 | 1,41 |
| Volume d'intrusion de mercure sur la plage (0,1 -10 $\mu$m) (ml/g) | 0,010 | 0,015 | 0,010 |
| Coulabilité | 2,5 | 23 | 22 |

**ESSAI COMPARATIF A :**

Système catalytique : CuCl A / ZnCl$_2$ / Sn

Dans un réacteur vertical, cylindrique, en verre, muni d'un agitateur métallique et d'un distributeur de gaz en verre fritté, on charge une poudre constituée de : 210 g de silicium, 16,5 g de CuCl A, 1,44 g de ZnCl$_2$ et 0,38 g de bronze contenant 10 % en poids d'étain. On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h. La température du réacteur est régulée à 300°C et le débit de chlorure de méthyle est maintenu à 60 g/h pendant 8 heures, l'essai se déroule à pression atmosphérique.
Le mélange produit est analysé par chromatographie en phase vapeur, et il est caractérisé par une proportion de DMDCS égale à 86,5 % (% pondéral).
La productivité moyenne de l'essai est égale à 193 g MCS/kg Si engagé/h.

**Exemple 1 :**

Système catalytique : CuCl B / ZnCl$_2$ / Sn

Dans un réacteur vertical, cylindrique, en verre, muni d'un agitateur métallique et d'un distributeur de gaz en verre fritté, on charge une poudre constituée de : 210 g de silicium, 16,5 g de CuCl A, 1,44 g de ZnCl$_2$ et 0,38 g de bronze contenant 10 % en poids d'étain. On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h. La température du réacteur est régulée à 300°C et le débit de chlorure de méthyle est maintenu à 60 g/h pendant 8 heures, l'essai se déroule à pression atmosphérique.
Le mélange produit est analysé par chromatographie en phase vapeur, et il est caractérisé par une proportion de DMDCS égale à 88,2 % (% pondéral).
La productivité moyenne de l'essai est égale à 209 g MCS/kg Si engagé/h.

**Exemple 2 :**

Système catalytique : CuCl C / ZnCl$_2$ / Sn

Dans un réacteur vertical, cylindrique, en verre, muni d'un agitateur métallique et d'un distributeur de gaz en verre fritté; on charge une poudre constituée de : 210 g de silicium, 16,5 g de CuCl A, 1,44 g de ZnCl$_2$ et 0,38 g de bronze contenant 10 % en poids d'étain. On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h. La température du réacteur est régulée à 300°C et le débit de chlorure de méthyle est maintenu à 60 g/h pendant 8 heures, l'essai se déroule à pression atmosphérique.

Le mélange produit est analysé par chromatographie en phase vapeur, et il est caractérisé par une proportion de DMDCS égale à 87,6 % (% pondéral).

La productivité moyenne de l'essai est égale à 213 g MCS/kg Si engagé/h.

**Revendications**

1. Procédé de préparation d'alkylhalogénosilanes par réaction d'un halogénure d'alkyle avec une masse solide, dite masse de contact, formée de silicium et d'un système catalytique comportant ($\alpha$) un catalyseur au cuivre, et ($\beta$) un groupe d'additifs promoteurs comprenant :

   - un additif $\beta1$ choisi parmi le zinc métallique, un composé à base de zinc et un mélange de ces espèces,
   - un additif $\beta2$ choisi parmi l'étain, un composé à base d'étain et un mélange de ces espèces,
   - éventuellement un additif $\beta3$ choisi parmi le césium, le potassium, le rubidium, le phosphore, un composé dérivé de ces métaux/métalloïdes et un mélange de ces espèces,
   ledit procédé de synthèse directe étant **caractérisé en ce que** le catalyseur au cuivre ($\alpha$) est sous la forme de billes d'halogénure cuivreux, lesdites billes présentant les spécifications suivantes :

   + un facteur de sphéricité qui se situe dans l'intervalle allant de 0,6 à 1 ;
   + une distribution granulométrique où la valeur de D50 se situe dans l'intervalle allant de 50 à 1500 $\mu$m ;
   + une texture poreuse qui est égale ou inférieure à 0,2 ml/g pour un diamètre de pores allant de 0,1 à 10 $\mu$m ;
   + et une coulabilité qui est égale ou supérieure à 8.

2. Procédé selon la revendication 1, **caractérisé** le catalyseur ($\alpha$) est sous la forme de billes d'halogénure cuivreux, les dites billes présentant les spécifications suivantes :

   + un facteur de sphéricité qui se situe dans l'intervalle allant de 0,8 à 1 ;
   + une distribution granulométrique où la valeur de D50 se situe dans l'intervalle allant de 50 à 800 $\mu$m ;
   + une texture poreuse qui est égale ou inférieure à 0,1 ml/g pour un diamètre de pores allant de 0,1 à 10 $\mu$m ;
   + et une coulabilité qui est égale ou supérieure à 10.

3. Procédé selon la revendication 1, **caractérisé** le catalyseur ($\alpha$) est sous la forme de billes d'halogénure cuivreux, les dites billes présentant les spécifications suivantes :

   + un facteur de sphéricité qui se situe dans l'intervalle allant de 0,9 à 1 ;
   + une distribution granulométrique où la valeur de D50 se situe dans l'intervalle allant de 50 à 500 $\mu$m ;
   + une texture poreuse qui est égale ou inférieure à 0,05 ml/g pour un diamètre de pores allant de 0,1 à 10 $\mu$m ;
   + et une coulabilité qui est égale ou supérieure à 12.

4. Procédé selon l'une quelconque des revendications 1 à 3, **caractérisé en ce que** la partie ($\alpha$) du système catalytique est utilisée à une teneur pondérale de 1 à 20 % par rapport au poids total de silicium engagé.

5. Procédé selon l'une quelconque des revendications 1 à 4, **caractérisé en ce que** la teneur en additif $\beta1$ est située dans l'intervalle allant de 0,01 à 2,0 %.

6. Procédé selon l'une quelconque des revendications 1 à 5, **caractérisé en ce que** l'additif $\beta1$ est le zinc métallique et/ou le chlorure de zinc.

7. Procédé selon l'une quelconque des revendications 1 à 6, **caractérisé en ce que** la teneur en additif $\beta2$ est située dans l'intervalle allant de 10 à 500 ppm.

8. Procédé selon l'une quelconque des revendications 1 à 7, **caractérisé en ce que** l'additif $\beta2$ est l'étain métal.

9. Procédé selon la revendication 8, **caractérisé en ce que** l'étain métallique est engagé sous forme de bronze.

10. Procédé selon l'une quelconque des revendications 1 à 9, **caractérisé en ce que** la teneur en additif $\beta3$, quand on en utilise un, est située dans l'intervalle allant de : 0,01 à 2,0 % dans le cas de l'emploi d'un additif $\beta3$ à base de

métal alcalin ; et de 50 à 300 ppm dans le cas de l'emploi d'un additif β3 à base de métalloïde.

11. Procédé selon l'une quelconque des revendications 1 à 10, **caractérisé en ce que** l'additif β3 est le chlorure de césium, le chlorure de potassium, le chlorure de rubidium, le phosphure de cuivre Cu₃P, un alliage cuivre-phosphore et/ou un mélange de ces composés.

12. Procédé selon l'une quelconque des revendications 1 à 11, **caractérisé en ce que** la réaction de synthèse directe est conduite à une température se situant dans l'intervalle allant de 260°C à 400°C.

**Claims**

1. Process for the preparation of alkylhalosilanes by reaction of an alkyl halide with a solid body, referred to as contact body, formed of silicon and of a catalytic system comprising (α) a copper catalyst and (β) a group of promoter additives comprising:

    - an additive β1 chosen from metallic zinc, a zinc-based compound and a mixture of these entities,
    - an additive β2 chosen from tin, a tin-based compound and a mixture of these entities,
    - optionally an additive β3 chosen from cesium, potassium, rubidium, phosphorus, a compound derived from these metals/semimetals and a mixture of these entities,

    said direct synthesis process being **characterized in that** the copper catalyst (α) is in the form of cuprous halide beads, said beads exhibiting the following specifications:

        + a sphericity factor which lies within the range from 0.6 to 1;
        + a particle size distribution where the value of $D_{50}$ lies within the range from 50 to 1500 $\mu$m;
        + a porous texture which is equal to or less than 0.2 ml/g for a pore diameter ranging from 0.1 to 10 $\mu$m;
        + and a flowability which is equal to or greater than 8.

2. Process according to Claim 1, **characterized in that** the catalyst (α) is in the form of cuprous halide beads, said beads exhibiting the following specifications:

        + a sphericity factor which lies within the range from 0.8 to 1;
        + a particle size distribution where the value of $D_{50}$ lies within the range from 50 to 800 $\mu$m;
        + a porous texture which is equal to or less than 0.1 ml/g for a pore diameter ranging from 0.1 to 10 $\mu$m;
        + and a flowability which is equal to or greater than 10.

3. Process according to Claim 1, **characterized in that** the catalyst (α) is in the form of cuprous halide beads, said beads exhibiting the following specifications:

        + a sphericity factor which lies within the range from 0.9 to 1;
        + a particle size distribution where the value of $D_{50}$ lies within the range from 50 to 500 $\mu$m;
        + a porous texture which is equal to or less than 0.05 ml/g for a pore diameter ranging from 0.1 to 10 $\mu$m;
        + and a flowability which is equal to or greater than 12.

4. Process according to any one of Claims 1 to 3, **characterized in that** the part (α) of the catalytic system is used at a content by weight of 1 to 20%, with respect to the total weight of silicon involved.

5. Process according to any one of Claims 1 to 4, **characterized in that** the content of additive β1 lies within the range from 0.01 to 2.0%.

6. Process according to any one of Claims 1 to 5, **characterized in that** the additive β1 is metallic zinc and/or zinc chloride.

7. Process according to any one of Claims 1 to 6, **characterized in that** the content of additive β2 lies within the range from 10 to 500 ppm.

8. Process according to any one of Claims 1 to 7, **characterized in that** the additive β2 is tin metal.

9.  Process according to Claim 8, **characterized in that** the metallic tin is involved in the form of bronze.

10. Process according to any one of Claims 1 to 9, **characterized in that** the content of additive β3, when one of them is used, lies within the range from: 0.01 to 2.0%, in the case of the use of an additive β3 based on alkali metal; and from 50 to 300 ppm, in the case of the use of an additive β3 based on semimetal.

11. Process according to any one of Claims 1 to 10, **characterized in that** the additive β3 is cesium chloride, potassium chloride, rubidium chloride, copper phosphide $Cu_3P$, a copper-phosphorus alloy and/or a mixture of these compounds.

12. Process according to any one of Claims 1 to 11, **characterized in that** the direct synthesis reaction is carried out at a temperature lying within the range from 260°C to 400°C.

**Patentansprüche**

1.  Verfahren zur Herstellung von Alkylhalogensilanen durch Umsetzung eines Alkylhalogenids mit einer als Kontaktmasse bezeichneten festen Masse aus Silicium und einem katalytischen System, umfassend (α) einen Kupferkatalysator und (β) eine Gruppe von Promotoradditiven, enthaltend:

    - ein Additiv β1, ausgewählt aus metallischem Zink, einer Verbindung auf Basis von Zink und einer Mischung dieser Spezies,
    - ein Additiv β2, ausgewählt aus Zinn, einer Verbindung auf Basis von Zinn und einer Mischung dieser Spezies,
    - gegebenenfalls ein Additiv β3, ausgewählt aus Caesium, Kalium, Rubidium, Phosphor, einer von diesen Metallen/Metalloiden abgeleiteten Verbindung und einer Mischung dieser Spezies,

    wobei das Direktsyntheseverfahren **dadurch gekennzeichnet ist, daß** der Kupferkatalysator (α) in Form von Kupfer (I)-halogenid-Kugeln vorliegt, wobei die Kugeln die folgenden Spezifikationen aufweisen:

    + einen Sphärizitätsfaktor im Bereich von 0,6 bis 1;
    + eine Teilchengrößenverteilung, bei der der D50-Wert im Bereich von 50 bis 1500 $\mu$m liegt;
    + eine poröse Textur kleiner gleich 0,2 ml/g für einen Porendurchmesser von 0,1 bis 10 $\mu$m
    + und eine Gießbarkeit größer gleich 8.

2.  Verfahren nach Anspruch 1, **dadurch gekennzeichnet, daß** der Katalysator (α) in Form von Kupfer(I)-halogenid-Kugeln vorliegt, wobei die Kugeln die folgenden Spezifikationen aufweisen:

    + einen Sphärizitätsfaktor im Bereich von 0,8 bis 1;
    + eine Teilchengrößenverteilung, bei der der D50-Wert im Bereich von 50 bis 800 $\mu$m liegt;
    + eine poröse Textur kleiner gleich 0,1 ml/g für einen Porendurchmesser von 0,1 bis 10 $\mu$m
    + und eine Gießbarkeit größer gleich 10.

3.  Verfahren nach Anspruch 1, **dadurch gekennzeichnet, daß** der Katalysator (α) in Form von Kupfer(I)-halogenid-Kugeln vorliegt, wobei die Kugeln die folgenden Spezifikationen aufweisen:

    + einen Sphärizitätsfaktor im Bereich von 0,9 bis 1;
    + eine Teilchengrößenverteilung, bei der der D50-Wert im Bereich von 50 bis 500 $\mu$m liegt;
    + eine poröse Textur kleiner gleich 0,05 ml/g für einen Porendurchmesser von 0,1 bis 10 $\mu$m
    + und eine Gießbarkeit größer gleich 12.

4.  Verfahren nach einem der Ansprüche 1 bis 3, **dadurch gekennzeichnet, daß** der Teil (α) des katalytischen Systems in einem Gewichtsanteil von 1 bis 20%, bezogen auf das Gesamtgewicht des eingesetzten Siliciums, verwendet wird.

5.  Verfahren nach einem der Ansprüche 1 bis 4, **dadurch gekennzeichnet, daß** der Gehalt an Additiv β1 im Bereich von 0,01 bis 2,0% liegt.

6.  Verfahren nach einem der Ansprüche 1 bis 5, **dadurch gekennzeichnet, daß** es sich bei dem Additiv β1 um metallisches Zink und/oder Zinkchlorid handelt.

7. Verfahren nach einem der Ansprüche 1 bis 6, **dadurch gekennzeichnet, daß** der Gehalt an Additiv β2 im Bereich von 10 bis 500 ppm liegt.

8. Verfahren nach einem der Ansprüche 1 bis 7, **dadurch gekennzeichnet, daß** es sich bei dem Additiv β2 um zinnmetall handelt.

9. Verfahren nach Anspruch 8, **dadurch gekennzeichnet, daß** das metallische Zinn in Form von Bronze eingesetzt wird.

10. Verfahren nach einem der Ansprüche 1 bis 9, **dadurch gekennzeichnet, daß** der Gehalt an Additiv β3, wenn eines verwendet wird, im Bereich von 0,01 bis 2,0% im Fall der Verwendung eines Additivs β3 auf Basis von Alkalimetall und 50 bis 300 ppm im Fall der Verwendung eines Additivs β3 auf Basis von Metalloid liegt.

11. Verfahren nach einem der Ansprüche 1 bis 10, **dadurch gekennzeichnet, daß** es sich bei dem Additiv β3 um Caesiumchlorid, Kaliumchlorid, Rubidiumchlorid, Kupferphosphid $Cu_3P$, eine Kupfer-Phosphor-Legierung und/oder eine Mischung dieser Verbindungen handelt.

12. Verfahren nach einem der Ansprüche 1 bis 11, **dadurch gekennzeichnet, daß** man die Direktsynthesereaktion bei einer Temperatur im Bereich von 260°C bis 400°C durchführt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2380995 A
- US 2464033 A
- US 2403370 A
- US 2427605 A
- GB 1207466 A
- GB 907161 A
- SU 307650 A
- US 4762940 A
- FR 2861728
- US 2449821 A
- US 2389931 A

**Littérature non-brevet citée dans la description**

- **Walter NOLL.** Chemistry and Technology of Silicones. Académie Press Inc, 1968, 26-41
- **Tamhankar S.S. ; Gokkarn A.N. ; Doraiswamy L.K.** *Chem. Eng. Sci.,* 1981, vol. 36, 1365-1372
- **Weber G. ; Vile D. ; Souha M. ; Guillot B.** *C.R.Acad.Sci.Paris,* 1988, vol. t.307 (II), 1155-1161
- **Acker J. ; Köhter S. ; Lewis K.M. ; Bohmhammel K.** *Silicon Chemistry,* 2003, vol. 2, 195-206
- **Oye H.A. ; Rong H.M. ; Nygaard L. ; Schüssler G. ; Tusset J.Kr.** Silicon for the chemical industry. TAPIR VORLAG TRONDHEIM, 08 Juin 1994, vol. II
- **Gomez F. ; Denoyel R. ; Rouquerol J.** *Langmuir,* 2000, vol. 16, 3474
- Standard shear testing technique for particulate solids using the Jenike shear cell. The Institution of Chemical Engineers, 1989